# EUROPEAN PATENT SPECIFICATION

(11) **EP 2 466 870 B1**
(45) Date of publication and mention of the grant of the patent: **08.07.2015**
(21) Application number: 10306402.8
(22) Date of filing: 14.12.2010
(51) Int. Cl.: H04N 21/2343, H04N 21/24, H04N 21/21, H04N 21/231, H04N 21/23, H04L 12/26, H04L 29/06, H04L 29/08, H04N 21/845

(54) **Caching entity**
Cache-Entität
Entité de cache

(43) Date of publication of application: 20.06.2012
(73) Proprietor: ALCATEL LUCENT, 92100 Boulogne-Billancourt (FR)
(72) Inventor: de Vleeschauwer, Danny, 9940 Evergem (BE); Robinson, Dave, Aldbourne, Wiltshire SN8 2NP (GB)
(74) Representative: Narmon, Gisèle Marie Thérèse

(56) References cited:
- WO-A1-2010/060106
- US-A1- 2010 017 516
- REJAIE R ET AL: "MOCHA: A QUALITY ADAPTIVE MULTIMEDIA PROXY CACHE FOR INTERNET STREAMING", PROCEEDINGS OF THE 11TH. INTERNATIONAL WORKSHOP ON NETWORK AND OPERATING SYSTEMS SUPPORT FOR DIGITAL AUDIO AND VIDEO. NOSSDAV 2001. PORT JEFFERSON, NY, JUNE 25 - 26, 2001; [PROCEEDINGS OF THE INTERNATIONAL WORKSHOP ON NETWORK AND OPERATING SYSTEM SUP, 25 June 2001 (2001-06-25), pages 3-10, XP001134291, DOI: DOI:10.1145/378344.378345 ISBN: 978-1-58113-370-7
- XU DU ET AL: "Variable Rate Caching for Video Delivery in Heterogeneous Environment", COMMUNICATIONS, 2006. ICC '06. IEEE INTERNATIONAL CONFERENCE ON, IEEE, PI, 1 June 2006 (2006-06-01), pages 1046-1051, XP031025195, ISBN: 978-1-4244-0354-7
- FANG YU ET AL: "QoS-Adaptive Proxy Caching for Multimedia Streaming Over the Internet", IEEE TRANSACTIONS ON CIRCUITS AND SYSTEMS FOR VIDEO TECHNOLOGY, IEEE SERVICE CENTER, PISCATAWAY, NJ, US, vol. 13, no. 3, 1 March 2003 (2003-03-01), XP011071939, ISSN: 1051-8215
- REJAIE R ET AL: "Multimedia proxy caching mechanism for quality adaptive streaming applications in the Internet", INFOCOM 2000. NINETEENTH ANNUAL JOINT CONFERENCE OF THE IEEE COMPUTER AND COMMUNICATIONS SOCIETIES. PROCEEDINGS. IEEE TEL AVIV, ISRAEL 26-30 MARCH 2000, PISCATAWAY, NJ, USA,IEEE, US, vol. 2, 26 March 2000 (2000-03-26), pages 980-989, XP010376188, DOI: DOI:10.1109/INFCOM.2000.832273 ISBN: 978-0-7803-5880-5
- BAOFENG LIU ET AL: "Proxy caching based on segments for layered encoded video over the internet", EMERGING TECHNOLOGIES: FRONTIERS OF MOBILE AND WIRELESS COMMUNICATION, 2004. PROCEEDINGS OF THE IEEE 6TH CIRCUITS AND SYSTEMS SYMPOSIUM, PISCATAWAY, NJ, USA, IEEE, vol. 1, 31 May 2004 (2004-05-31), pages 41-44, XP010716008, DOI: DOI:10.1109/CASSET.2004.1322912 ISBN: 978-0-7803-7938-1

## Description

The invention relates to a caching entity adapted to cache encoded video segments for delivery to a plurality of client entities over a network using a request-response protocol such as the hypertext transport protocol, said video segments being part of a video object and each of said video segments being encoded according to a set of predefined respective quality levels, said caching entity including a popularity measurement unit adapted to maintain popularity values for respective ones of said encoded video segments, a rate estimation unit adapted to obtain in function of time an estimated fluctuation in available bit rate over said network between said caching entity and said client entities and a decision unit adapted to identify in function of said popularity value and of said estimated fluctuation a subset of encoded video segments to be cached by said caching entity.
Such a caching entity is for instance described in the article "Mocha : A Quality Adaptive Multimedia Proxy Cache for Internet Streaming" by Reza Redjaei et el.

It is an object of the invention to identify a simple way to identify the subset of encoded video segments to be cashed in function of the popularity values and of the estimated fluctuation of available bit rates.

The caching entity according to the invention realizes this object in that said rate estimation unit is adapted to generate from said estimated fluctuation a histogram of available bit rates between said caching unit and said client entities, and that said decision unit is adapted to combine each one of said popularity values with frequencies of said histogram by determining their mathematical product to obtain for said client entities combination results for each one of said encoded video segments, to derive from said combination results a ranking of said encoded video segments and to identify from said ranking said subset of encoded video segments.

In this way, the caching entity takes into account the variations in available bit rate between the caching entity and the user entities and also foresees what quality or encoded segments the client entity will probably request.

This is especially advantageous and simple if the requests of all clients are configured to pass through the caching entity. Indeed, since all requests are then served from this caching entity, it can easily make an estimate of the available bit rates and use these to build up the histogram of typical bit rate fluctuations between the cache and the clients.

Another additional feature of an embodiment of the caching entity according to the invention is that said caching entity includes a monitoring unit adapted to monitor communication over said network between said client entities and a server entity storing encoded video segments of said video object of which at least part of said encoded video segments cached by said caching entity are part, said monitoring unit being adapted to derive from said communication information on quality levels of encoded video segments requested by said user entities and information on a possible congestion state between said server entity and said caching entity and between said caching entity and said user entities and said rate estimation unit being adapted to build up said histogram using at least said information on said quality levels if said congestion state indicates congestion between said caching entity and said user entities.. This feature is especially advantageous if the clients directly contact the server who then redirects these clients to the cache when the cache contains the object and serves the request itself otherwise. In this case there are two options to build up the knowledge of typical bit rate fluctuations between the cache and the clients. In the first option the knowledge of the locally available bit rates is built only on requests that are served from the cache. In a system where most of the requests are served from the cache an accurate estimate of this knowledge can then be obtained. In a system where this is not the case, the requests that are served from the cache are taken into account in the same way, but they possibly do not provide an estimate for this knowledge with enough statistical significance. In that case the communication between the server and the clients are intercepted and used to deduce whether or not congestion occurred between the server and the cache or between the cache and the user. In the former case, it is known that the local available bit rate is higher than the observed end-to-end available bit rate. This is then used to fine-tune this knowledge.

Still another additional feature of an embodiment of the caching entity according to the invention is that said communication includes video segment request packets, including said information on said quality levels, and being sent from said client entities to said server entity, video packets including encoded video segments and being sent from said server entity to said client entities, and congestion signals, such as acknowledge packets, sent from said client entities to said server entity to acknowledge receipt of said video packets and that said monitoring unit is adapted to derive said information on said possible congestion state from timing and sequencing information included in said video packets and in said congestion signals, in this way getting the information from the above mentioned intercepted communication necessary to evaluate possible congestion and to fine tune the knowledge pertaining to the available bit rate between the cache and the clients. This is based on the intercepting unit inspecting the passing packets from server to client and from client to server. This intercepting unit predicts the congestion signals (e.g. duplicate ACKs") the client would send to the server based on the packets it sees from the server to the client. If it only sees these congestion signals on the way back (from the client to the server) it concludes that there is only congestion between the server and the intercepting unit. When there are additional congestion signals, it means that there is congestion between the intercepting unit and the client as well.

Embodiments of caching entities in accordance with the present invention are hereafter described, by way of example only, and with reference to the accompanying figures, where
- Fig. 1 represents a video delivery system of which one such an embodiment is part,
- Fig. 2 represents an example of the knowledge pertaining to the available bit rate between the cache and the client, under the form of a histogram, as used in CE of Fig.1, and how this knowledge (in this case, histogram) is derived from observed bit rates between cache and client, and
- Fig. 3 shows a video delivery system of which another such an embodiment is part.

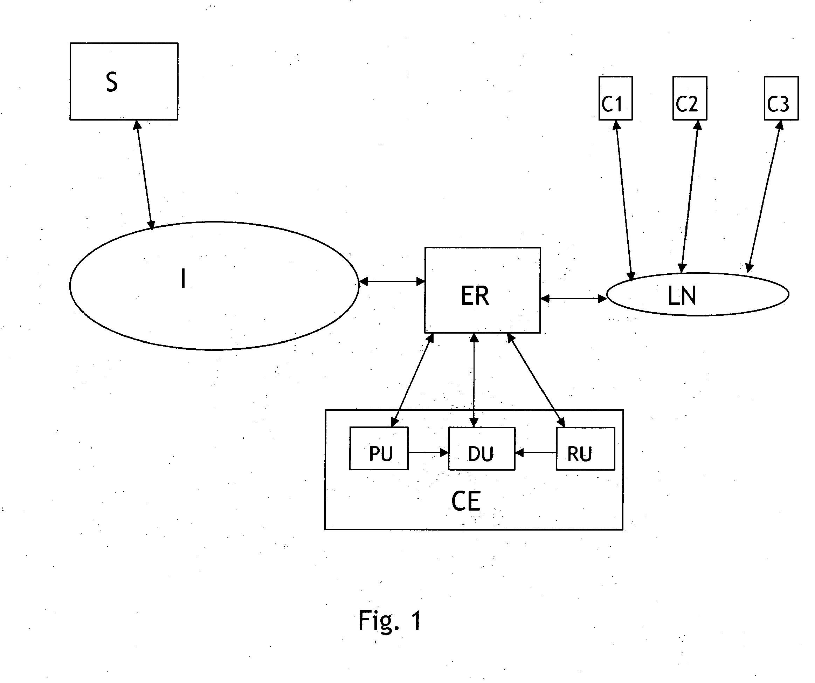

Fig. 1 represents a system wherein client entities C1, C2, C3 can communicate with a video server entity S over a local network LN, such as an xDSL access network, and over a public network I, such as an internet network, via an edge router ER to request video objects using the hypertext transport protocol HTTP over TCP (Transmission Control Protocol). S stores segments of video objects each encoded to the desired delivery format, such as H.264, and at multiple bit rates corresponding to multiple quality versions. The segments are cut along video Group of Pictures (GOP) boudaries that have no dependencies on past or future segments/GOPs so that they can be decoded independently of other segments. S[m,k,n] (not shown) is a segment of a m-th video where k is a time index and n is a quality layer (bit rate) index. Equivalently, segment S[m,k,n] is the k-th segment in layer n of movie m. The time index k points to a video interval [k·Δ,(k+1)·Δ], where Δ is the segment duration, typically 2sec, and layer index n has an associated (average) video bit rate R[n]. In normal operation C1, C2, C3 ask for consecutive video segments, i.e., segment k+1 is asked after segment k, and so on. At each segment boundary they can switch layers, i.e., the layer n that is asked by the client for time interval k+1, may differ from the one of interval k.
C1, C2, C3 choose to download segments of different quality depending on their available bandwidth over LN. The video requests are sent to S via a caching entity CE also connected to LN and I, over ER. If the requested segment is available at CE, CE sends it to the requesting user entity. If not, then the request is forwarded to S by CE and the requested video segement is sent to the user entity by S via CE. CE contains a decision unit DU that is adapted to decide on whether or not to store this received video segment based on information received from a popularity measurement unit PU and from a rate estimation unit RU also included in CE.

PU measures the overall popularity of movies. It maintains a popularity value P[m,k] for each time portion of movie m. Each time one of the clients asks for segment k (irrespective of the layer n) this value P[m,k] is updated. This is done similar to the updates that are performed in, e.g., the LRU (Least Recently Used) or the LFU (Least Frequently Used) caching algorithm. There is one popularity value P[m,k] per time interval k, as different portions of the movie m may have different popularity. For instance, the beginning of a movie might be viewed more frequently, as some people may get bored with the content and may stop watching.

It has to be remarked that although LRU and LFU are mentioned as popularity caching algorithms, also other such algorithms and any traditional method to maintain these popularity values P[m,k] can be used.

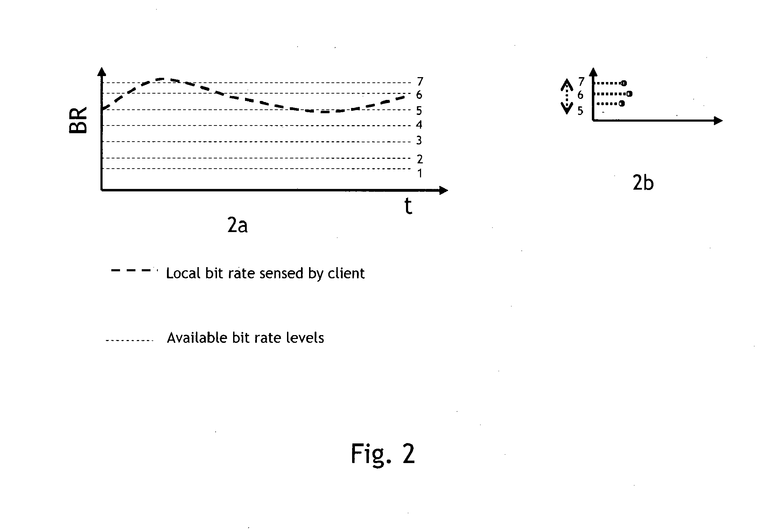

RU estimates the available network bit rate on the local network between CE and C1, C2, C3. For each video interval of duration Δ it determines the available network bit rate on the local network LN, irrespective of which segment k and of which video m is served by the CE. Since all video requests from C1, C2, C3 pass via CE, RU can determine the available bit rate from the quality specified in these requests. Based on this determined bit rate accumulated over time, a histogram of locally available network bit rate is computed. The bins in this histogram are centered around R[n], and F[n] is the n-th relative frequency of this histogram. It is relative in the sense that the sum of F[n] over all n is 1. An example of such a histogram is shown in Fig. 2 where 2a shows a diagram (BR = bit rate, t = time) of the local bit rate as sensed by a client entity and 2b shows the histogram deduced by the rate estimation unit from the client entity request.

DU combines the values P[m,k] and F[n] (for all movies m, all segments k and all layers n) by determining their product P[m,k]·F[n] and ranks based on these values the segments S[m,k,n]. If a segment S[m,k,n] has a high value P[m,k]·F[n], it means it belongs to an overall popular video and its associated bit rate is requested frequently over the network between the cache and the clients and it should thus be cached. From what rating value on DU decides to cache the segments depends on the local caching capacity.

It has to be noted that although the above described embodiment of CE1 DU uses the product of P[m,k] and F[n] as combination, also other suitable combinations can be thought of by a person skilled in the art to achieve the same goal. Also, the caching entity can instead of using a histogram to represent knowledge about the available bit rates in the access network use the average µ and the standard deviation σ of the available bit rate thereof or a upper Rᵤ and lower R₁ limit of this available bit rate. In the former case F[n] can for instance be chosen equal to exp(-(R[n]-µ)²/2σ²), while in the latter F[n] can for instance be chosen to be 1 if R₁<R[n]<Rᵤ, expressing that close to the average bit rate the rate or within both limits respectively should have a high probability of being cached.

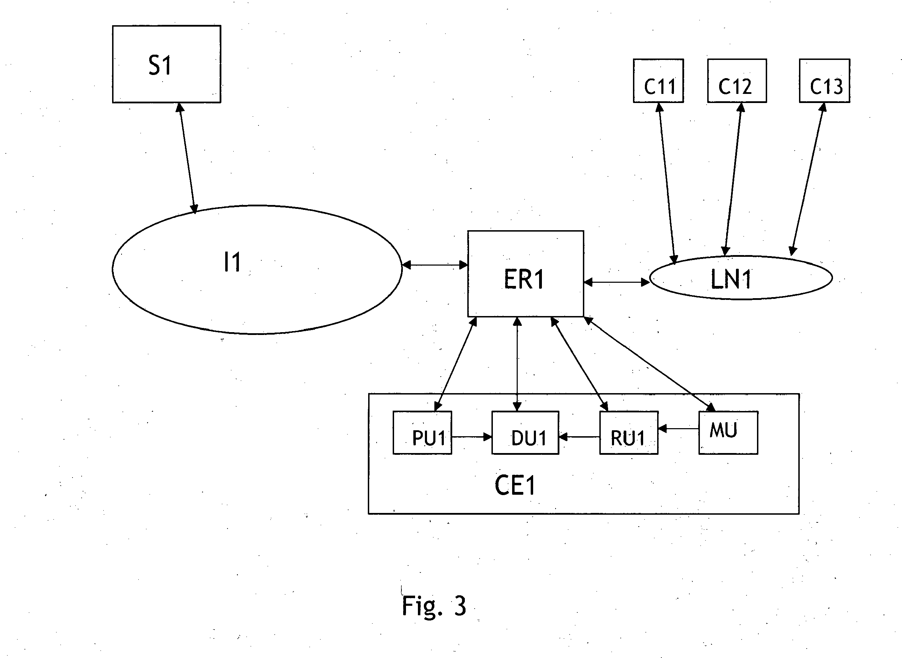

Fig. 3 shows a system similar to the one of Fig. 1, but with an alternative embodiment of the caching unit. In this system client entities C11, C12, C13 can communicate with a video server entity S1 over a local network LN1 and over a public network 11 via an edge router ER1 to request video objects using a request-response protocol in the same way as in the system of Fig. 1. The video requests are in this system sent to S1 directly and S1 redirects these client entities to a caching unit CE1s when this caching unit contains the encoded video segments and serves the request itself otherwise.

CE1 contains a decision unit DU1, a popularity measurement unit PU1 and a rate estimation unit RU1 that have the same functionality as DU, PU and RU of the system as described above with reference to Fig.1. In addition CE1 contains a monitoring unit MU that is adapted to intercept via ER1 the video segment request packets sent by C11, C 12 and C 13, the video segment packets sent by S 1 to C11, C12 and C 13 and the ACKs (acknowledgement packets) returned by C11, C12 and C 13 to S1. From the segment requests sent to S1, MU can deduce what quality, and thus bit rates, are requested by C11, C12 and C13. These bit rates may only be taken into account to build the histogram by RU1 in case congestion occurs between CE1 and C11, C12, C13. To evaluate where congestion is situated MU uses the timestamps and sequence numbers of the video segment packets and the ACKs intercepted by MU in the following way :

MU keeps track of the sequence number N(k) of a packet k and deduces from the size of this packet k the size S(k) of the payload of the packet. If there is no packet loss in 11 between S1 and CE1 then N(K+1) = N(k) + S(k). In case of packet loss because of congestion, N(k+1) differs from N(k) + S(k) and ultimately the TCP receiver at the user side (not shown) will send a "duplicate ACK", which is a particular case of a congestion signal (with which the TCP receiver notifies the sender that there was congestion on the end-to-end path) which the MU will observe. If the MU observes the duplicate ACKs it predicts, the MU can infer that congestion occurred upstream of the ER (between CE1 and S1). If the MU observes a considerable amount of duplicate ACKs that it did not predict it can infer that the congestion occurred between the ER and the clients. Thus, based on how TCP works, MU can in this way determine that there is congestion between S 1 and CE 1 and RU1 will in this case not take into account the rate determined from the deep packet inspection to fine tune the histogram.

If, however MU sees a "duplicate ACK" for packet with sequence number N(k) + S(k) - 1 whilst packets with sequence number N(k) and with sequence number N(k+1) were seen to pass by in a normal way because N(k+1) = N(k) + S(k), this indicates that packet k+1 got lost between CE1 and C11, C12, C13, meaning congestion between CE1 and C11, C12, C13. In this case the requested bit rate is representative for the available bit rate between CE1 and C11, C12, C 13 and is taken into account for building up the histogram.

In this embodiment MU relies on the fact that HTTP runs on TCP. However alternative embodiments using other protocols can be imagined working in a similar way if one takes into account the principle to analyse the packet stream towards the client entities and deducing therefrom how the ACK stream should look like. If the ACK stream is different from the expected one this means congestion between the caching entity and the client entity and the requested video rate by that client entity is representative for building up the histogram.

It has to be noted that although the monitoring unit is in the above embodiment included in the caching entity, in an alternative embodiment this monitoring unit can be a stand alone entity communicating with the caching entity or more specifically with the rate estimation unit thereof to provide the requested information on possible congestion and on requested bit rate.

In still another embodiment (not shown), the caching entity or more specifically the rate estimation unit actively probes the available bit rate to the client entities. This can be done by setting up a number of connections to a number of clients and assess the bit rate that can be attained over these connections. As this is a technique well know in the art it is herein not further described in details.

All elements of the above system and of the elements of the different embodiments of the caching entity have been described in a functional way. As implementation thereof based on this functional description is obvious for a person skilled in the art, this implementation is not further described in details.

It has to be remarked that the described functions may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Other hardware, conventional and/or custom, may also be included.

## Claims

1. Caching entity (CE ; CE1) adapted to cache encoded video segments for delivery to a plurality of client entities (C1, C2, C3 ; C11, C12, C13) over a network (I, LN ; I1, LN1) using a request-response protocol such as the hypertext transport protocol, said video segments being part of a video object and each of said video segments being encoded according to a set of predefined respective quality levels, said caching entity (CE ; CE1) including a popularity measurement unit (PU ; PU1) adapted to maintain popularity values for respective ones of said encoded video segments, a rate estimation unit (RU ; RU1) adapted to obtain in function of time an estimated fluctuation in available bit rate over said network (LN ; LN1) between said caching entity (CE ; CE1) and said client entities (C1, C2, C3 ; C11, C12, C 13) and a decision unit (DU ; DU1) adapted to identify in function of said popularity value and of said estimated fluctuation a subset of encoded video segments to be cached by said caching entity (CE ; CE1), **characterized in that** said rate estimation unit (RU ; RU1) is adapted to generate from said estimated fluctuation a histogram of available bit rates between said caching unit (CE ; CE1) and said client entities (C1, C2, C3 ; C11, C12, C 13), and that said decision unit (DU ; DU1) is adapted to combine each one of said popularity values with frequencies of said histogram by determining their mathematical product to obtain for said client entities (C1, C2, C3 ; C11, C12, C13) combination results for each one of said encoded video segments, to derive from said combination results a ranking of said encoded video segments and to identify from said ranking said subset of encoded video segments.

2. Caching entity (CE1) according to claim 1, **characterized in that** said caching entity (CE1) includes a monitoring unit (MU) adapted to monitor communication over said network (11, LN1) between said client entities (C11, C12, C13) and a server entity (S1) storing encoded video segments of said video object of which at least part of said encoded video segments cached by said caching entity (CE1) are part, said monitoring unit (MU) being adapted to derive from said communication information on quality levels of encoded video segments requested by said client entities(C 11, C12, C13) and information on a possible congestion state between said server entity(S1) and said caching entity (CE1) and between said caching entity (CE1) and said client entities (C11, C12, C13) and said rate estimation unit (RU1) being adapted to build up said histogram using at least said information on said quality levels if said congestion state indicates congestion between said caching entity (CE1) and said client entities.

3. Caching entity (CE1) according to claim 2, **characterized in that** said communication includes video segment request packets, including said information on said quality levels, and being sent from said client entities (C11, C12, C13) to said server entity (S1), video packets including encoded video segments and being sent from said server entity (S1) to said client entities (C11, C12, C13), and congestion signals, such as acknowledge packets, sent from said client entities (C11, C12, C 13) to said server entity (S1) to acknowledge receipt of said video packets and that said monitoring unit (MU) is adapted to derive said information on said possible congestion state from timing and sequencing information included in said video packets and in said congestion signals.

## Patentansprüche

1. Cache-Entität (CE; CE1), welche dazu ausgelegt ist, codierte Videosegmente zur Bereitstellung an eine Vielzahl von Client-Entitäten (C1, C2, C3; C11, C12, C13) über ein Netzwerk (I, LN; I1, LN1) unter Verwendung eines Anforderungs-Antwort-Protokolls wie beispielsweise das Hypertext-Transportprotokoll in den Cache-Speicher aufzunehmen, wobei die besagten Videosegmente Teil eines Videoobjektes sind und ein jedes der besagten Videosegmente gemäß einem Satz von vordefinierten jeweiligen Qualitätsstufen codiert wird, wobei die besagte Cache-Einheit (CE; CE1) eine Popularitätsmesseinheit (PU; PU1), welche dazu ausgelegt ist, Popularitätswerte für jeweilige der besagten codierten Videosegmente einzuhalten, eine Ratenschätzeinheit (RU; RU1), welche dazu ausgelegt ist, in Abhängigkeit von der Zeit eine geschätzte Schwankung in Bezug auf die verfügbare Bitrate über das besagte Netzwerk (LN; LN1) zwischen der besagten Cache-Entität (CE; CE1) und den besagten Client-Entitäten (C1, C2, C3; C11, C12, C13) zu erhalten, und eine Entscheidungseinheit (DU; DU1), welche dazu ausgelegt ist, in Abhängigkeit von dem besagten Popularitätswert und von der geschätzten Schwankung eines Teilsatzes von codierten Videosegmenten, die von der besagten Cache-Einheit (CE; CE1) in den Cache-Speicher aufzunehmen sind, zu identifizieren, umfasst, **dadurch gekennzeichnet, dass** die besagte Ratenschätzeinheit (RU; RU1) dazu ausgelegt ist, ausgehend von der besagten geschätzten Schwankung ein Histogramm von verfügbaren Bitraten zwischen der besagten Cache-Einheit (CE; CE1) und den besagten Client-Entitäten (C1, C2, C3; C11, C12, C13) zu erzeugen, und dass die besagte Entscheidungseinheit (DU; DU1) dazu ausgelegt ist, einen jeden der besagten Popularitätswerte mit Frequenzen des besagten Histogramms durch Ermitteln deren mathematischen Produktes zu kombinieren, um für die besagten Client-Entitäten (C1, C2, C3; C11, C12, C13) Kombinationsergebnisse für ein jedes der besagten codierten Videosegmente zu erhalten, von den besagten Kombinationsergebnissen eine Rangordnung der besagten Videosegmente abzuleiten und aus der besagten Rangordnung der besagten codierten Videosegmente den besagten Teilsatz von codierten Videosegmenten zu identifizieren.

2. Cache-Entität (CE1) nach Anspruch 1, **dadurch gekennzeichnet, dass** die besagte Cache-Entität (CE1) eine Überwachungseinheit (MU) umfasst, welche dazu ausgelegt ist, die Kommunikation über das Netzwerk (I1, LN1) zwischen den besagten Client-Entitäten (C11, C12, C13) und einer Server-Entität (S1), welche codierte Videosegmente des besagten Videoobjektes, dem mindestens ein Teil der besagten von der besagten Cache-Entität (CE1) zwischengespeicherten codierten Videosegmente angehört, speichert, zu überwachen, wobei die besagte Überwachungseinheit (MU) dazu ausgelegt ist, von der besagten Kommunikation Informationen über Qualitätsstufen der von den besagten Client-Entitäten (C11, C12, C13) angeforderten codierten Videosegmente und Informationen über einen möglichen Überlastungszustand zwischen der besagten Server-Entität (S1) und der besagten Cache-Entität (CE1) und zwischen der besagten Cache-Entität (CE1) und den besagten Client-Entitäten (C11, C12, C13) abzuleiten, und wobei die besagte Ratenschätzeinheit (RU1) dazu ausgelegt ist, das besagte Histogramm unter Verwendung zumindest der besagten Informationen über die besagten Qualitätsstufen zu erstellen, wenn der besagte Überlastungszustand eine Überlastung zwischen der besagten Cache-Entität (CE1) und den besagten Client-Entitäten anzeigt.

3. Cache-Entität (CE1) nach Anspruch 2, **dadurch gekennzeichnet, dass** die besagte Kommunikation Videosegment-Anforderungspakete umfasst, welche die besagten Informationen über die besagten Qualitätsstufen enthalten und von den besagten Client-Entitäten (C11, C12, C13) an die besagte Server-Entität (S1) gesendet werden, wobei Videopakete codierte Videosegmente, die von der besagten Server-Entität (S1) an die besagten Client-Entitäten (C11, C12, C13) gesendet werden, und Überlastungssignale wie beispielsweise Bestätigungspakete, welche von den besagten Client-Entitäten (C11, C12, C13) an die besagte Server-Entität (S1) gesendet werden, um den Empfang der besagten Videopaket zu bestätigen, umfassen, und dass die besagte Überwachungseinheit (MU) dazu ausgelegt ist, die besagten Informationen über den besagten möglichen Überlastungszustand von in den besagten Videopaketen und in den besagten Überlastungssignalen enthaltenen Timing- und Sequenzierungsinformationen abzuleiten.

## Revendications

1. Entité de mise en cache (CE; CE1) adaptée pour mettre en cache des segments vidéo codés destinés à être distribués à une pluralité d'entités client (C1, C2, C3 ; C11, C12, C13) sur un réseau (I, LN ; I1, LN1) à l'aide d'un protocole de requête-réponse, tel que le protocole de transfert hypertexte, lesdits segments vidéo faisant partie d'un objet vidéo et chacun desdits segments vidéo étant codé conformément à un ensemble de niveaux de qualité respectifs prédéfinis, ladite entité de mise en cache (CE ; CE1) comprenant une unité de mesure de popularité (PU ; PU1) adaptée pour maintenir des valeurs de popularité pour des segments vidéo codés respectifs parmi lesdits segments vidéo codés, une unité d'estimation de débit (RU ; RU1) adaptée pour obtenir, en fonction du temps, une fluctuation estimée du débit binaire disponible sur ledit réseau (LN ; LN1) entre ladite entité de mise en cache (CE ; CE1) et lesdites entités client (C1, C2, C3 ; C11, C12, C13) et une unité de décision (DU ; DU1) adaptée pour identifier, en fonction de ladite valeur de popularité et de ladite fluctuation estimée, un sous-ensemble de segments vidéo codés devant être mis en cache par ladite entité de mise en cache (CE ; CE1), **caractérisée en ce que** ladite unité d'estimation de débit (RU ; RU1) est adaptée pour générer, à partir de ladite fluctuation estimée, un histogramme de débits binaires disponibles entre ladite unité de mise en cache (CE ; CE1) et lesdites entités client (C1, C2, C3 ; C11, C12, C13), et **en ce que** ladite unité de décision (DU ; DU1) est adaptée pour combiner chacune desdites valeurs de popularité avec des fréquences dudit histogramme en déterminant leur produit mathématique pour obtenir pour lesdites entités client (C1, C2, C3 ; C11, C12, C13) des résultats de combinaison pour chacun desdits segments vidéo codés, pour déduire desdits résultats de combinaison un classement desdits segments vidéo codés et pour identifier à partir dudit classement ledit sous-ensemble de segments vidéo codés.

2. Entité de mise en cache (CE1) selon la revendication 1, **caractérisée en ce que** ladite entité de mise en cache (CE1) comprend une unité de surveillance (MU) adaptée pour surveiller la communication sur ledit réseau (I1, LN1) entre lesdites entités client (C11, C12, C13) et une entité de serveur (S1) stockant des segments vidéo codés dudit objet vidéo dont au moins une partie desdits segments vidéo codés mis en cache par ladite entité de mise en cache (CE1) fait partie, ladite unité de surveillance (MU) étant adaptée pour déduire de ladite communication des informations sur des niveaux de qualité de segments vidéo codés demandés par lesdites entités client (C11, C12, C13) et des informations sur un état d'encombrement possible entre ladite entité de serveur (S1) et ladite entité de mise en cache (CE1) et entre ladite entité de mise en cache (CE1) et lesdites entités client (C11, C12 C13), et ladite unité d'estimation de débit (RU1) étant adaptée pour développer ledit histogramme en utilisant au moins lesdites informations sur lesdits niveaux de qualité si ledit état d'encombrement indique un encombrement entre ladite unité de mise en cache (CE1) et lesdites entités client.

3. Entité de mise en cache (CE1) selon la revendication 2, **caractérisée en ce que** ladite communication comprend des paquets de requêtes de segments vidéo, comprenant lesdites informations sur lesdits niveaux de qualité, et étant envoyés à partir desdites entités client (C11, C12, C13) à ladite entité de serveur (S1), les paquets vidéo comprenant des segments vidéo codés et étant envoyés à partir de ladite entité de serveur (S1) auxdites entités client (C11, C12, C13), et des signaux d'encombrement, tels que des paquets d'accusé de réception, envoyés à partir desdites entités client (C11, C12, C13) à ladite entité de serveur (S1) pour accuser réception desdits paquets vidéo et **en ce que** ladite unité de surveillance (MU) est adaptée pour déduire lesdites informations sur ledit état d'encombrement possible à partir d'informations de synchronisation et de séquençage comprises dans lesdits paquets vidéo et dans lesdits signaux d'encombrement.
